## Europäisches Patentamt
## European Patent Office
## Office européen des brevets

(19)

(11) Veröffentlichungsnummer: **0 078 467**
**B1**

(12) # EUROPÄISCHE PATENTSCHRIFT

(45) Veröffentlichungstag der Patentschrift:
**27.04.88**

(21) Anmeldenummer: **82109780.5**

(22) Anmeldetag: **22.10.82**

(51) Int. Cl.⁴: **A 47 F 5/14**, F 16 B 7/14,
A 47 F 7/19, G 09 F 7/18,
G 09 F 1/10

(54) **Kleiderpräsentiergestell.**

(30) Priorität: **30.10.81 CH 6961/81**

(43) Veröffentlichungstag der Anmeldung:
**11.05.83 Patentblatt 83/19**

(45) Bekanntmachung des Hinweises auf die Patenterteilung:
**27.04.88 Patentblatt 88/17**

(84) Benannte Vertragsstaaten:
**AT BE DE FR GB IT NL SE**

(56) Entgegenhaltungen:
**DE-A-1 575 174**
**FR-A-2 010 407**
**US-A-3 287 040**
**US-A-4 180 346**

(73) Patentinhaber: **Fehlbaum & Co., Unterdorfstrasse
21, CH- 4143 Dornach (CH)**

(72) Erfinder: **Korth, Bernd, Bühlstrasse 54, D-7858 Weil
am Rhein (DE)**

(74) Vertreter: **Gehrig, Peter, A. Braun, Braun, Héritier,
Eschmann AG Holbeinstrasse 36- 38, CH- 4051
Basel (CH)**

## Beschreibung

Die vorliegende Erfindung bezieht sich auf ein Kleiderpräsentiergestell nach dem Oberbegriff des Patentanspruchs 1.

In Verkaufsräumen aufgestellte Kleiderpräsentiergestelle sind vielfach mit Einrichtungen zum Anbringen oder Halten von Preis- und/oder Grössenangaben-Anschriften oder -Plakaten versehen. Damit die Anschriften oder Plakate praktisch rund um das Präsentiergestell ablesbar sind, werden die Halteeinrichtungen vorzugsweise auf Stangen oder anderen Tragmitteln befestigt und damit die Informationsflächen auf eine Höhe gebracht, wo sie unbehindert sichtbar sind. Die Tragstangen und dergl. werden meist mit Klemm- und Schraubvorrichtungen an Gestellsäulen, Auslegern oder Traversen befestigt und bilden häufig ein mehr oder weniger angepasstes Zusatzteil zu dem damit ausgerüsteten Kleiderpräsentiergestell. In der US-A-3 287 040 die ein Kleiderpräsentiergestell gemäß Obergriff des Anspruchs 1 zeigt, ist als Halterung für die Tragstange eines Beschriftungsschildes eine Keilklemmvorrichtung beschrieben, bei welcher die Tragstange durch Reibungseingriff in einer Futterhülse gehalten ist, die auf das obere Ende einer Stützsäule drehbar aufsetzbar ist. Dabei bilden die Tragstange, die Keilklemmvorrichtung und die Futterhülse äussere Bauteile einer Einheit, die ihrerseits in der Stützsäule dreh- und längsverschiebbar eingesteckt und von dieser leicht abhebbar ist.

Die Gefahr des Auftretens von Druckstellen und Kratzern, abgeblätterter Farbe oder anderer Schutzüberzüge am Gestell und/oder der Tragstange ist dabei erheblich. Eine weitere Gefahr besteht darin, dass vorzugsweise bei der Demontage der oft leicht auf- und abbaubaren Gestelle die relativ dünnen und dabei mechanisch wenig widerstandsfähigen Plakatstangen verbogen werden und damit für den weiteren Gebrauch ausfallen.

Die Aufgabe der Erfindung besteht somit in der Schaffung eines Kleiderpräsentiergestells mit einer an diesem permanent vorhandenen und von aussen unsichtbar angeordneten Aufnahmevorrichtung für eine Plakattragstange, in welcher letztere höhenverstellbar und durch Klemmeingriff festgehalten ist.

Die erfindungsgemässe Lösung dieser Aufgabe ist durch den Patentanspruch 1 definiert. Ausführungsformen davon ergeben sich aus den abhängigen Ansprüchen 2 bis 6.

Der Vorteil des erfindungsgemässen Lösungsvorschlages besteht darin, dass die Plakattragstange ohne Betätigung von Schraub- und Klemmgliedern am Gestell zu befestigen und an diesem leicht in beliebige Höhenlagen bringbar ist, bei der Demontage des Gestells ohne Werkzeug vom bezüglichen Gestellteil abgezogen werden kann, und die Gefahr einer Oberflächenbeschädigung praktisch ausgeschlossen ist.

Die Erfindung ist nachstehend anhand der Zeichnung beispielsweise beschrieben. In der Zeichnung zeigt:

Fig. 1 die Befestigung einer Plakattragstange im Innern einer rohrförmigen Gestelltragsäule im Vertikalschnitt,

Fig. 2 eine Ansicht der Befestigungsvorrichtung in Blickrichtung II-II in Fig. 1.

Fig. 3 eine Tragstangen-Befestigungsvorrichtung im Innern einer Kreuztragsäule im Vertikalschnitt, und

Fig. 4 eine Ansicht der Befestigungsvorrichtung in Blickrichtung IV-IV in Fig. 3.

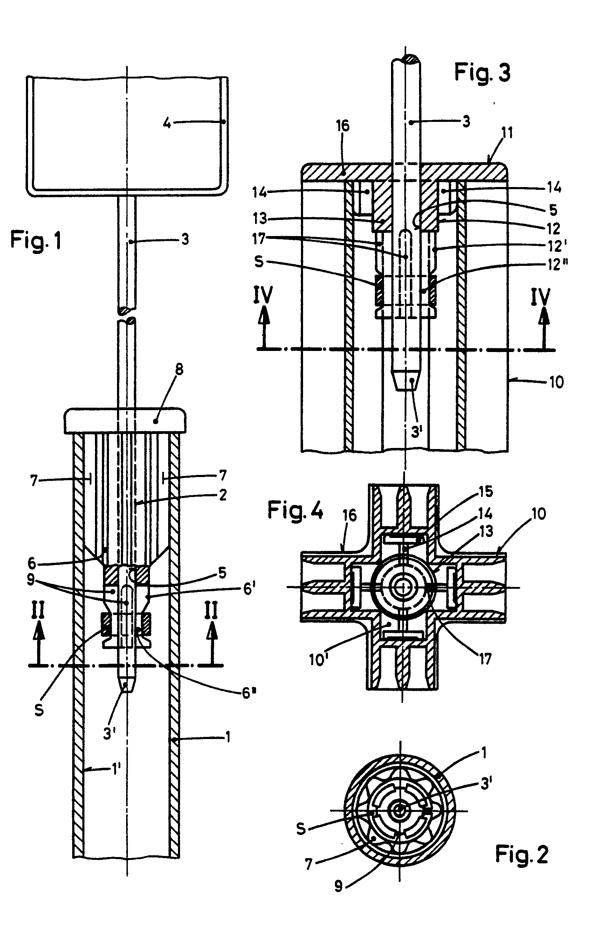

Die Ausführungsform nach den Fig. 1 und 2 zeigt eine Rundrohrsäule 1 eines Kleiderpräsentiergestells, in deren oberes Ende eine Plakattragstangenbefestigungsvorrichtung 2 strammsitzend eingesetzt ist. Die Plakattragstange 3, welche beispielsweise einen Plakathalterahmen 4 an ihrem oberen Ende aufweist, sitzt zentral in der Aufnahmebohrung 5 der Tragstangenbefestigungsvorrichtung 2. Das untere Tragstangenende 3' ist beispielsweise durch eine Endausrundung oder eine Endverjüngung so gestaltet, dass die Stange 3 ohne Zentrierschwierigkeiten in die Aufnahmebohrung 5 der Befestigungsvorrichtung 2 einführbar ist.

Die Tragstangenbefestigungsvorrichtung 2 weist einen länglichen Zapfenteil 6 auf, der über einen Teil seiner Länge mit satt an der Wand der Aufnahmeöffnung 1' in der Säule 1 anliegenden Führungs- und Spannrippen 7 versehen ist, die die Tragstangern befestigungsvorrichtung 2 in der Rundrohrsäule 1 zentrieren. Das obere Ende des Zapfenteils 6 kann mit einer Säulenabdeckkappe 8 versehen sein, die als dekorativer Säulenabschluss geformt sein kann. Der untere Zapfenabschnitt ist in zwei Stufen verjüngt, wobei die obere Stufe 6' einen Durchmesser aufweist, der etwas kleiner ist als der Hauptdurchmesser des Zapfenteils 6, und die untere Stufe 6'' um jenes Mass dünner ist als die obere Stufe 6', welches zur Sicherung eines Spannringes S gegen Abfallen vom unteren Zapfenabschnitt erforderlich ist. Der untere Zapfenabschnitt ist mit radial durchgehenden Längsschlitzen 9 versehen, die über einen wesentlichen Teil seiner Länge reichen und einen flexiblen Spannbereich zum federelastischen Festhalten der Plakattragstange 3 an der Tragstangenbefestigungsvorrichtung 2 festlegen.

Der Führungs- und Klemmbereich samt der Säulenabdeckkappe 8 der Tragstangenbefestigungsvorrichtung 2 sind einstückig aus einem zähelastischen bzw. angemessen flexiblen schlagfesten Kunststoff gefertigt, und der Spannring S besteht vorzugsweise aus Stahl oder Bronze.

Die Fig. 3 und 4 zeigen die Gestaltung einer Tragstangenbefestigungsvorrichtung 11 in Anwendung bei einer typischen Kreuztragsäule 10. Die Plakattragstange und deren Aufnahmebohrung in der Befestigungsvorrichtung 11 sind mit den gleichen Referenznummern 3 und 5 wie im ersten Ausführungsbeispiel bezeichnet.

Der wiederum längliche Zapfenteil 12 der Befestigungsvorrichtung 11 weist in seinem obersten (Führungs-) Teil einen zumindest angenähert zylindrischen Abschnitt 13 auf, dessen Durchmesser zweckmässig auf den Diagonalabstand der einspringenden Eckkanten im Hohlraum 10' des Kreuzsäulenprofils ausgerichtet ist, so dass der Abschnitt 13 satt an diesen Kanten anliegt. Damit lassen sich diese Eckkanten als ein Zentrierhilfsmittel der Befestigungsvorrichtung verwenden. Am obenliegenden zylindrischen Abschnitt 13 sind radial abstehende T-förmige Flügelzentrierelemente 14 angebracht, deren radial zuäusserst liegende Zentrierbalken 15 auf die Kreuzschenkelbreite abgestimmt sind und zumindest eine Verdrehsicherung der Befestigungsvorrichtung an der Tragsäule 10 bilden. Der Zapfenteil 12 kann, wie bereits früher erläutert, mit einer Säulenabdeckkappe 16 versehen sein, mit deren Unterseite die Flügelzentrierelemente 14 verbunden sind.

Der untere Zapfenabschnitt ist wiederum in zwei Stufen verjüngt. Die obere Stufe 12' weist einen Durchmesser auf, der etwas kleiner ist als der Durchmesser des obersten zylindrischen Abschnitts 13. Die untere Stufe 12'' ist um jenes Mass dünner als die obere Stufe 12', welches zur Sicherung eines Spannringes S gegen Abfallen vom unteren Zapfenabschnitt erforderlich ist.

Der untere Zapfenabschnitt ist weiterhin mit radial durchgehenden Längsschlitzen 17 versehen, die praktisch über seine ganze Länge reichen und einen flexiblen Spannbereich zum federelastischen Festhalten der Plakattragstange 3 an der Tragstangenbefestigungsvorrichtung 12 festlegen.

**Patentansprüche**

1. Kleiderpräsentiergestell mit einer höhenverstellbaren Tragstange (3) für die Aufnahme von Plakat-Haltemitteln (4) und mit einer Vorrichtung (2) mit einem Zapfenteil (6, 12) zum Befestigen der Tragstange (3) in einer Aufnahmeöffnung eines Stützenteils (1, 10) des Kleiderpräsentiergestells, dadurch gekennzeichnet, dass das Zapfenteil (6, 12) in die Aufnahmeöffnung (1', 10') des Stützenteils (1, 10) strammsitzend eingesetzt ist und eine zentrale Aufnahmebohrung (5) für die Tragstange (3) aufweist und dass die Tragstangen-Befestigungsvorrichtung (2) ein mit dem Zapfenteil (6, 12) verbundenes, die Tragstange (3) im Klemmeingriff federnd umgreifendes Spannteil (6', 6''; 12', 12'') aufweist.

2. Gestell nach Anspruch 1, dadurch gekennzeichnet, dass der Zapfenteil (6, 12) mit die Tragstangen-Befestigungsvorrichtung (2) in der Aufnahmeöffnung (1', 10') zentrierenden Eingriffsmitteln (7, 14) versehen ist.

3. Gestell nach Anspruch 1 oder 2, dadurch gekennzeichnet, dass das Spannteil (6', 6''; 12', 12'') mit einer Mehrzahl über seine ganze Länge reichender, radial durchgehender Längsschlitze (9, 17) versehen ist, um einen spannzangenartigen Eingriff der stehengebliebenen Ringsegmente auf der Oberfläche der Tragstange (3) zu erzeugen, und dass über die Ringsegmente ein die Andruckkraft erhöhender Spannring (S) gelegt ist.

4. Gestell nach Anspruch 1 oder 3, dadurch gekennzeichnet, dass der Zapfenteil (6, 12) und das Spannteil (6', 6''; 12', 12'') als einstückiger Körper aus einem zähelastischen Kunststoff geformt sind.

5. Gestell nach einem der Ansprüche 1 bis 4, dadurch gekennzeichnet, dass am freien Ende des Zapfenteils (6, 12) eine Säulenabdeckkappe (8, 16) angeformt ist.

6. Gestell nach einem der Ansprüche 1 bis 5, dadurch gekennzeichnet, dass das freie Ende der Tragstange (3) mit einer Ausrundung oder mit einer konisch verjüngten Partie (3') versehen ist.

**Claims**

1. A clothes presentation frame having a vertically adjustable carrying rod (3) for receiving display-board-retaining means (4) and a device (2) having a pin member (6, 12) for the attachment of the carrying rod (3) in a receiving aperture in a support member (1, 10) of the clothes presentation frame, characterized in that the pin member (6, 12) is inserted with a tight fit into the receiving aperture (1', 10') in the support member (1, 10) and has a central receiving bore (5) for the carrying rod (3), and the carrying rod attaching device (2) has a clamping member (6', 6''; 12', 12'') which is connected to the pin member (6, 12) and engages clampingly and resiliently around the carrying rod (3).

2. A frame according to claim 1, characterized in that the pin member (6, 12) has engaging means (7, 14) centring the carrying rod attaching device (2) in the receiving aperture (1', 10').

3. A frame according to claims 1 or 2, characterized in that the clamping member (6, 6'; 12', 12'') is formed with a plurality of radially continuous slots (9, 17) which extend over its whole length, to produce a pliers-like engagement of the remaining annular segments on the surface of the carrying rod (3), a tension ring (S) which increases contact pressure force being laid over the annular segments.

4. A frame according to claims 1 or 3, characterized in that the pin member (6, 12) and the clamping member (6', 6''; 12', 12'') are moulded as unitary members from a viscoplastic material.

5. A frame according to one of claim 1 to 4, characterized in that a column covering hood (8, 16) is moulded on the free end of the pin member (6, 12).

6. A frame according to one of claims 1 to 5, characterized in that the free end of the carrying rod (3) is formed with a rounded portion or a conically tapering portion (3').

## Revendications

1. Présentoir pour vêtements comprenant une tige porteuse (3) réglable verticalement destinée à recevoir des moyens de support (4) d'un tableau, et un dispositif (2) comprenant un élément à pivot (6, 12) pour la fixation de la tige porteuse (3) dans une ouverture de réception d'un élément d'appui (1, 10) du présentoir pour vêtements, caractérisé en ce que l'élément à pivot (6, 12) est engagé fermement dans l'ouverture de réception (1', 10') de l'élémant d'appui (1, 10) et est pourvu d'un perçage central (5) de réception de la tige porteuse (3), et en ce que le dispositif (2) de fixation de la tige porteuse est pourvu d'un organe de sarrage (6', 6'' ; 12', 12'') relié à l'élément à pivot (6, 12) et enserrant la tige porteuse (3) de façon élastique dans un encliquetage de serrage.

2. Présentoir suivant la revendication caractérisé en ce que l'élément à pivot (6, 12) est pourvu de moyens de prise (7, 10) destinés à centrer le dispositif (2) de fixation de la tige porteuse dans l'ouverture de réception (1', 10').

3. Présentoir suivant la revendication 1 ou 2, caractérisé en ce que l'organe de serrage (6', 6''; 12', 12'') est pourvu de plusieurs fentes oblongues (9, 17) transperçant radialement et s'étendant sur toute sa longueur afin de produire un encliquetage à pincement de segments annulaires sur la surface de la tige porteuse (3), et en ce qu'un anneau de serrage (S) est disposé sur les segments annulaires afin d'augmenter la force de serrage.

4. Présentoir suivant la revendication 1 ou 3, caractérisé en ce que l'élément à pivot (6, 12) et l'organe de serrage (6', 6'' ; 12', 12'') sont formés d'une seule pièce en matière synthétique viscoplastique.

5. Présentoir suivant l'une des revendications 1 à 4, caractérisé en ce qu'une chape de colonne (8, 16) est formée à l'extrémité libre de l'élément à pivot (6, 12).

6. Présentoir suivant l'une des revendications 1 à 5, caractérisé en ce que l'extrémité libre de la tige porteuse (3) est pourvue d'une partie arrondie ou d'une partie conique effilée (3').

Fig.1

Fig.2

Fig.3

Fig.4